# NEUE EUROPÄISCHE PATENTSCHRIFT

(11) **EP 2 030 898 B2**
(45) Veröffentlichungstag und Bekanntmachung des Hinweises auf die Entscheidung über den Einspruch: **28.09.2016**
(45) Hinweis auf die Patenterteilung: 22.02.2012
(21) Anmeldenummer: 08015187.1
(22) Anmeldetag: 28.08.2008
(51) Int. Cl.: B65B 25/06, B65B 35/44, B65G 47/08, B65G 47/71, B65G 47/31

(54) **Verfahren zum Betrieb eines Einlegers**
Method for operating a feeding conveyor
Procédé pour le fonctionnement d'un convoyeur d'alimentation

(30) Priorität: 28.08.2007 DE 102007040749; 05.09.2007 DE 102007042026
(43) Veröffentlichungstag der Anmeldung: 04.03.2009
(73) Patentinhaber: Multitec Holdings GmbH, 49504 Lotte (DE)
(72) Erfinder: Bialy, Jürgen, 48341 Altenberge (DE)
(74) Vertreter: Beier, Ralph

(56) Entgegenhaltungen:
- EP-A1- 1 291 305
- EP-A2- 1 683 746
- WO-A-97/10165
- DE-A1- 2 531 967
- DE-A1- 4 419 446
- DE-C1- 3 630 791
- DE-T2- 69 605 971
- GB-A- 2 050 981
- JP-A- 2003 020 117
- NL-A- 8 205 077
- US-A- 5 209 339

## Beschreibung

Die Erfindung betrifft ein Verfahren zum Betrieb eines Einlegers, wie er im Bereich der Verpackung von Gütern verwendet wird. Im Nachfolgenden wird dieses Verfahren für einen Einleger anhand von zu verpackenden Schnittgütem, wie beispielsweise zu verpackenden Käse- oder Wurstscheiben, beschrieben. Es ist jedoch so zu verstehen, dass das erfindungsgemäße Verfahren nicht auf Einleger für ausschließlich diesen Einsatzzweck beschränkt ist.

Nach dem Schneiden von Wurst- oder Käsescheiben werden über eine Fördereinrichtung diese Scheiben den Produktverpackungen zugeführt und in diese eingelegt. Dabei ist es von großer Bedeutung, dass die zu verpackenden Güter, wie z. B. die Wurst- oder Käsescheiben, zum einen exakt ausgerichtet werden, so dass sie exakt ausgerichtet den Verpackungen zugeführt werden können. Zum anderen ist es von großer Bedeutung, dass die zu verpackenden Güter zu entsprechenden Formaten zusammengestellt werden entsprechend des jeweiligen. Formates der Verpackungsmaschine (z. B. vier aus Wurst- oder Käsescheiben bestehende Schindel nebeneinander und vier dieser Schindeln hintereinander) und von Bedeutung ist ebenfalls, dass zwischen der Schneidvorrichtung und der Verpackungsmaschine ein gewisser Puffer an Verpackungsgütern aufgebaut wird, um bei einem kurzfristigen Stillstand oder Leerlauf der Schneidmaschine, z. B. bei einem Wechsel des Schnittgutes, eine dennoch kontinuierliche Zuführung von Schnittgütem zur Verpackungsmaschine ermöglichen zu können. Für diese Positionierung bzw. Ausbildung eines Formats der Verpackugsgüterwird ein sogenannter Einleger verwandt.

Aus der Praxis ist ein Verfahren zum Betrieb eines Einlegers bekannt, bei dem im Bereich des Einlaufes des Einlegers das Verpackungsgut längs positioniert und zu entsprechend der Verpackungsmaschine zusammengestellten Formaten zusammengefasst wird und anschließend das Verpackungsgut über zwei oder mehr Transportbänder geführt wird, die als Pufferstrecke dienen, bevor das Verpackungsgut der Verpackungsmaschine zugeführt wird.

Dieses aus dem Stand der Technik bekannte Verfahren zum Betrieb eines Einlegers hat den Nachteil, dass sich die im Anfangsbereich des Einlegers exakt positionierten Verpackungsgüter bei ihrem Weitertransport in Richtung des Auslaufs des Einlegers durch die vielfachen Übergaben an die unterschiedlichen Transportbänder des Einlegers, die insbesondere als Pufferstrecke dienen, in ihrer Position verändern können und eine exakte Positionierung des Transportgutes am Ende der Wegstrecke des Einlegers und somit auch anschließend in der Verpackung nicht garantiert ist. Eine aufwendige manuelle Korrektur ggf. vorkommender Fehllager des Transportgutes ist erforderlich.

Der Erfindung liegt die Aufgabe zugrunde, ein Verfahren zum Betrieb eines Einlegers derart auszubilden, dass bei geringem konstruktiven Aufwand eine exakte Ablage der Transportgüter bei der Abgabe derselben aus dem Bereich des Einlegers heraus erreicht wird, ohne dass manuelle Korrekturen von Fehllagen von Verpackungsgütern erforderlich sind.

Diese der Erfindung zugrundeliegende Aufgabe wird durch die Lehre des kennzeichnenden Teiles des Hauptanspruches gelöst.

Mit anderen Worten ausgedrückt werden bei dem erfindungsgemäßen Verfahren die Transportgüter im Endungsbereich des Einlegers längs ausgerichtet, kurz bevor eine Übergabe der Transportgüter auf das sogenannte Einlegeband erfolgt. Ferner erfolgt eine Querausrichtung der Käse- oder Wurstscheiben vor der Längsausrichtung der Käse- oder Wurstscheiben; und die Formatbildung der Käse- oder Wurstscheiben erfolgt nach dem Transport der Käse- oder Wurstscheiben durch eine oder mehrere Pufferzonen des Einlegers und vor dem Ablegen der Käse- oder Wurstscheiben auf das Einlegeband.

Vorteilhafte Ausgestaltungen der Erfindung sind in den Unteransprüchen erläutert.

Erfindungsgemäß erfolgt die Längsausrichtung der Transportgüter nach dem Transport derselben durch eine oder mehrere Pufferzonen des Einlegers und vor Ablegen der Transportgüter in den Bereich des Einlegebandes, um hierdurch eine Pufferung im Bereich des Einlegers zu erhalten und um zum anderen eine exakte Einlage der Transportgüter in den Bereich des Einlegebandes zu ermöglichen, ohne dass es einer Korrektur von Fehllagen kurz vor der Ablage in das Einlegeband bedarf.

Ausführungsbeispiele der Erfindung sind in den Figuren dargestellt, wobei
- Fig. 1: einen Einleger darstellt und
- Fig. 2: eine weitere Ausführungsform eines Ein- legers.

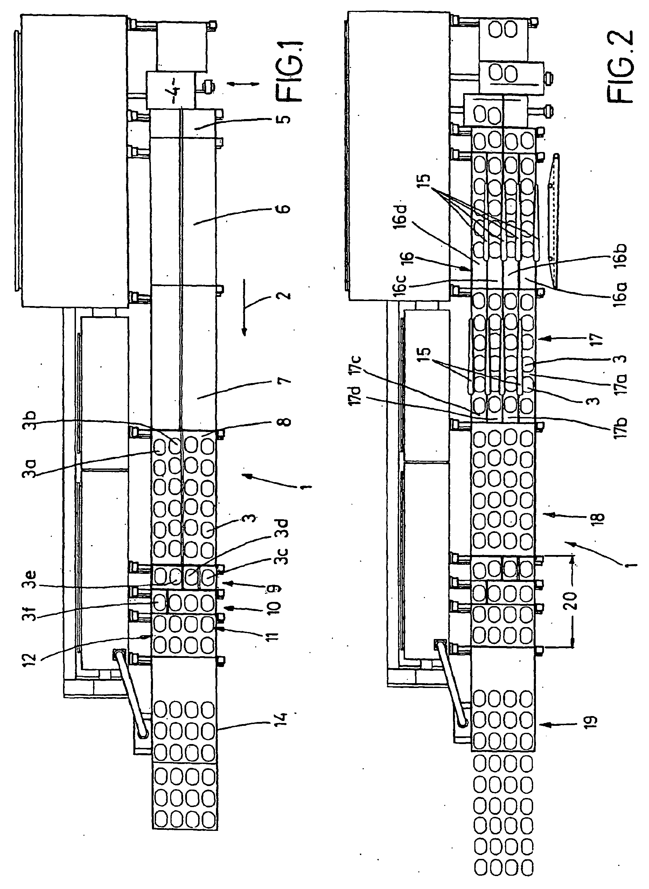

Bezug nehmend auf Fig. 1 wird ein Einleger 1 dargestellt, dessen Transportrichtung mit einem Pfeil 2 dargestellt wird. Es handelt sich um eine Aufsicht und die auf dem Einleger 1 transportierten Verpackungs- oder Transportgüter 3 können beispielsweise Schindeln sein, die aus mehreren Wurst- oder Käsescheiben bestehen.

Nach Bestückung des Einlegers 1 mit Transportgütern 3, z. B. Wurst- oder Käsescheiben, z. B. durch eine Schneidestation, erfolgt zunächst durch ein so genanntes Shuttle 4 eine Verteilung der Transportgüter 3 über die gesamte Transportbandbreite. Der Shuttle 4 kann, wie durch den Pfeil dargestellt, quer zur Förderrichtung hin und her bewegt werden und ermöglicht somit eine Querverteilung der Transportgüter sowie eine Weiterbeförderung der Transportgüter in Transportrichtung 2. Ein Vorteil des Shuttle 4 ist, dass er lediglich eine Länge von 400 bis 500 mm aufweisen kann und somit deutlich kürzer ausgebildet sein kann als sonstige Querverteiler, die eine Länge beispielsweise von 1.500 mm aufweisen können.

An das Shuttle 4 schließt sich in Transportrichtung 2 ein Gruppierband 5 an, das die Transportgüter 3 bereits zu Gruppen zusammenstellt, so dass in diesem Ausführungsbeispiel vier Schindeln in einer Reihe nebeneinander angeordnet sind. Zunächst ist jedoch eine Positionierung dieser Schindeln oder Transportgüter 3 nicht erfolgt, so dass beispielsweise das Transportgut 3a eine andere Längspositionierung als Transportgut 3b besitzt.

In dieser unpositionierten, jedoch gruppierten Lage werden die Transportgüter3 auf ein weiteres Transportband geführt, dem so genannten Eingangspuffer 6, der die Transportgüter auf ein so genanntes Koppelband 7 abgibt, das von einem weiteren Transportband, nämlich dem Auslaufpuffer 8 gefolgt wird, an den die Transportgüter abgegeben werden.

Diese drei Transportbänder 6, 7 und 8 ermöglichen eine Pufferung der in den Bereich des Einlegers abgegebenen und vom Bereich des Einlegers wiederum abgegebenen Transportgüter, so dass z. B. ein Wechsel des Schneidgutes in einer dem Einleger vorangestellten Schneidestation durchgeführtwerden kann undtrotzdem eine Kontinuität der vom Einleger 1 abgegebenen Transportgüter3 an eine Verpackungsstation gewährleistet ist. Der Puffer des Einlegers 1 kann nicht nur aus den dargestellten Bauteilen Eingangspuffer6, Koppelband 7 und Auslaufpuffer 8 bestehen, sondern beispielsweise auch aus zwei Transportbändern oder auch mehreren.

Im weiteren Verlauf der Transportrichtung werden die Transportgüter 3 einem ersten Gruppierband 9 zugeführt, in dem eine Positionierung in Längsrichtung der Transportgüter 3c, 3d und 3e durch den Einsatz von Lichtschranken erfolgt und in einem zweiten Gruppierband 10 erfolgt anschließend eine Längspositionierung des Transportgutes 3f, so dass nach Verlassen des zweiten Gruppierbandes 10 die aus vier nebeneinander angeordneten Transportgütern 3 bestehende Gruppe 11 längs positioniert ist.

Zum Antrieb der verschiedenen Transportbänder des ersten Gruppierbandes wird eine Dreifach-Hohlwelle verwandt und zum Transport der zwei Bänder des zweiten Gruppierbandes eine Zweifach-Hohlwelle, um einen unabhängigen Betrieb der jeweiligen Transportbänder zu ermöglichen. Es können aber auch andere Varianten des Antriebs gewählt werden.

An das zweite Gruppierband 10 schließt sich in Transportrichtung 2 das Formatband 12 an, das die Platzierung zwei hintereinander angeordneter Gruppen zu dem Format durchführt, das von der Verpackungsmaschine benötigt wird. Anschließend erfolgt eine Weitergabe des entsprechend positionierten Formates an ein Einlegeband14, das die Transportgüter in Richtung der Verpackungsmaschine bzw. in Richtung der Verpackung abgibt, in die die Transportgüter perfekt eingelegt werden.

Im Unterschied zu den Einlegern, die aus der Praxis bekannt sind, erfolgt also erst kurz vor Abgabe der Transportgüter 2 an das Einlegeband 14 eine Längspositionierung derTransportgütersowie eine Platzierung derselben zu einem verpackungsgerechten Format, wodurch vermieden wird, dass sich bereits im Eingangsbereich des Einlegers zu Formaten gebildete Transportgüter bzw. längs positionierte Transportgüter durch einen mehrfachen Wechsel von Transportbändern in ihrer Lage wieder verändern, was zu einer nicht genau definierten Ablage der Transportgüter im Bereich der Verpakkung führt.

Daher war es bei den aus der Praxis bekannten Einlegern erforderlich, dass die korrekte Abgabe der Transportgüter im Bereich der Verpackungsmaschine stets von einer Person überwacht werden musste, die ggf. Fehllagen manuell korrigieren musste, während bei dem vorgeschlagenen Einleger durch die erst kurz vor der Abgabe an das Einlegeband erfolgenden Positionierung und Platzierung zu entsprechenden Formaten eine deutlich höhere Präzision erreicht wird und die erfolgte Positionierung und Formatierung nicht durch wiederholte Wechsel von Transportbändern zunichte gemacht wird.

In einer in Fig. 2 dargestellten weiteren Ausführungsform eines vorgeschlagenen Einleger 1 erfolgt eine seitliche Ausrichtung derTransportgüter 3 im Bereich der Puffer- und Ausrichtzone, die durch die Transportbänder 16,17 und 18 gebildet wird, nachdem die Transportgüter die Shuttles und das Gruppierband passiert haben. In diesem Ausführungsbeispiel besteht das Transportband 16 aus vier unterschiedlichen, nebeneinander angeordneten Transportbändern 16a bis 16d. In diesem Ausführungsbeispiel werden die Transportbänder 16a und 16c zu einer Querausrichtung der Transportgüter 3 verwendet, wobei im Bereich des Transportbandes 16 für die Transportbänder 16a und 6c eine tunnelartige Ausbildung verwendet wird, bestehend jeweils aus den Einzeltransportbändern 16a und 16c am Boden des "Tunnels" und gleichgerichteten Förderbändern 15 an den jeweiligen Seitenbereichen der (oben offenen Tunnel), so dass diese dreiseitige Ausbildung bestehend aus Förderbändern 16a und 16c am Boden sowie zwei jeweils links und rechts dieserTransportbänder 16a und 16c verlaufenden angetriebenen Seitenbändern eine Querausrichtung, d.h. seitliche Ausrichtung derTransportgüter 3 erfolgt.

In diesem Ausführungsbeispiel sind die Einzeltransportbänder 16a und 16c aus der Ebene der Einzeltransportbänder 16b und 16d herausgeführt und nach oben geführt, so dass die Einzeltransportbänder 16a und 16c mitsamt ihrer "tunnelartigen Ausbildung" zum Beispiel 50 bis 60 Millimeter höher liegen als die Einzeltransportbänder 16b und 16d. Nach der Übergabe der nun quer ausgerichteten Transportgüter 3 an das weitere Transportband 17 werden die auf den Einzeltransportbändern 17b und 17d geführten Transportgüter 3 wiederum quer ausgerichtet, wobei wiederum diese Einzeltransportbänder 17b und 17d aus der Ebene der Einzeltransportbänder 17a und 17c herausgeführt, d. h., nach oben geführt werden und dort quer ausgerichtet werden, indem wiederum jeweils die Einzeltransportbänder 17b und 17d rechts und links von gleichlaufenden Seitentransportbändern 15 flankiert werden und somit eine Querausrichtung schief liegender Transportgüter, wie zum Beispiel Käse- oder Wurstscheiben, zu bewirken.

Anschließend werden die quer ausgerichteten Transportgüter 3 von den Einzeltransportbändern 17b und 17d an das weitere Transportband 18 weiter abgegeben, während im Bereich des Transportbandes 17 in diesem Ausführungsbeispiel die auf den Einzeltransportbändern 17a und 17c angeordneten und bereits quer ausgerichteten Transportgüter 3 ohne weitere Querausrichtung weiter transportiert werden, bevor sie dem Transportband 18 zugeführt werden.

Nach Abgabe der Transportgüter 3 aus der aus den Transportbändern 16 bis 18 gebildeten Puffer- und Ausrichtzone erfolgt anschließend eine Längsausrichtung und Formatbildung entsprechend der in Fig. 1 erörterten Weise im Bereich 20 unmittelbar vor dem so genannten "Einlegeband" 19. An das Einlegeband 19 kann sich eine Tarierung anschließen.

Mit dieser Ausführungsform ist es möglich, bei gleichbleibender Länge des Einlegers 1 eine Querausrichtung und Längsausrichtung wie auch einen ggf. erforderlichen Querversatz der Transportgüter zu erreichen und eine anschließend Formatierung durchzuführen. Die kombinierte Quer- und Längsausrichtung der Transportgüter im Bereich des Einlegers 1 wird dadurch ermöglicht, dass erst am Ende des Einlegers in Laufrichtung gesehen die Längsausrichtung und Formatbildung vor dem Einlegerband durchgeführt wird und nicht die Gefahr besteht, dass eine bereits im Anfangsbereich des Einlegers in Laufrichtung gesehen durchgeführte Längsausrichtung durch anschließende Maßnahmen zu einer Querausrichtung dazu führen kann, dass die einmal im Anfangsbereich des Einlegers durchgeführte Längsausrichtung zunichte gemacht wird und zu unpräzisen Abgaben des Transportgutes an die Verpackungsstation führt.

Es ist möglich, die Transportstrecken im Bereich der Puffer- und Ausrichtzone, in denen die Querausrichtung des Transportgutes erfolgt, auf dergleichen Ebene durchzuführen wie bei den Transportstrecken, die nicht quer ausgerichtet werden oder es ist möglich, eine oder mehrere Einzelförderbänder unter das Niveau der übrigen Einzeltransportbänder zu führen, um ggf. Platz für die für die Querausrichtung erforderlichen technischen Einrichtungen zu erhalten. Es ist ebenfalls möglich, die Einzeltransportbänder, in denen nicht quer ausgerichtet wird, in ein höheres oder tieferes Niveau zu führen im Vergleich zu den Einzeltransportbändern, in denen die Querausrichtung erfolgt. Es ist auch möglich, eine Querausrichtung sämtlicher Einzeltransportbänder im Bereich eines Transportbandes 6, 7 oder 8 durchzuführen.

Mit dem erwähnten Einleger 1 gemäß Figur 2 wird die Vorschaltung einer Querausrichtstation vor dem Einleger 1 unnötig, und somit ergibt sich sowohl eine Kosten- als auch Platzersparnis.

## Patentansprüche

1. Verfahren zum Betrieb eines Einlegers (1) mit Pufferzone mit der Zuführung von zu verpackenden Käse- oder Wurstscheiben (3) in den Bereich des Einlegers, einer im Bereich des Einlegers erfolgenden Quer- und Längsausrichtung der Käse- oder Wurstscheiben und mit einer Weiterleitung der ausgerichteten Käse- oder Wurstscheiben in Richtung einer Verpackungsmaschine, **gekennzeichnet durch**
(a) die Längsausrichtung der Käse- oder Wurstscheiben (3) - in Transportrichtung der Käse- oder Wurstscheiben gesehen - im Endbereich des Einlegers nach dem Transport der Käse- oder Wurstscheiben **durch** eine oder mehrere Pufferzonen des Einlegers (1) und vor dem Ablegen der Käse- oder Wurstscheiben auf ein Einlegeband (14, 19); und
(b) eine Querausrichtung der Käse- oder Wurstscheiben (3) vor der Längsausrichtung der Käse- oder Wurstscheiben; und
(c) die Formatbildung der Käse- oder Wurstscheiben nach dem Transport der Käse- oder Wurstscheiben **durch** eine oder mehrere Pufferzonen des Einlegers (1) und vor dem Ablegen der Käse- oder Wurstscheiben (3) auf das Einlegeband (14, 19).

2. Verfahren gemäß Anspruch 1, **gekennzeichnet durch** die Längsausrichtung und Formatbildung der Käse- oder Wurstscheiben (3) unmittelbar vor dem Ablegen derselben auf das Einlegeband (14, 19).

3. Verfahren gemäß einem der vorhergehenden Ansprüche, **gekennzeichnet durch** die Längsausrichtung der Käse- oder Wurstscheiben (3) mittels zweier hintereinander angeordneter Gruppierbänder (9, 10), auf denen jeweils ein Teil der nebeneinander angeordneten Käse- oder Wurstscheiben längs ausgerichtet werden.

## Claims

1. Method to operate a loading device (1) with a buffer zone, comprising the delivery of to be wrapped cheese or sausage slices (3) in the area of the loading device (1), a lateral and longitudinal alignment of the cheese or sausage slices (3) in the area of the loading device (1), and comprising a forwarding of the aligned cheese or sausage slices (3) in the direction of a packaging machine,
whereas
(a) the longitudinal alignment of the cheese or sausage slices (3) occurs - in view of the transfer direction of the cheese or sausage slices (3) - in the termination area of the loading device (1) after to the transportation of the cheese or sausage slices (3) throughout one or more buffer zones of the loading device (1) and prior to depositing the cheese or sausage slices (3) on the depositing belt (14, 19); and
(b) whereas a lateral alignment of the cheese or sausage slices (3) occurs prior to a longitudinal adjustment of the cheese or sausage slices (3); and
(c) whereas the format accumulation of the cheese or sausage slices (3) occurs subsequently to transporting the cheese or sausage slices (3) throughout one or more buffer zones of the loading device (1) and prior to depositing the cheese or sausage slices (3) on the depositing belt (14, 19).

2. Method according to claim 1,
whereas the longitudinal alignment and the format accumulation of the cheese or sausage slices (3) occurs directly prior to depositing the cheese or sausage slices (3) on the depositing belt (14, 19).

3. Method according to one of the preceding claims,
whereas the longitudinal alignment of the cheese or sausage slices (3) occurs using two consecutively arranged grouping belts (9, 10) at which a fraction of the coassembled cheese or sausage slices (3) is laterally adjusted.

## Revendications

1. Procédé pour faire fonctionner un convoyeur d'alimentation (1) avec une zone de mise en tampon avec l'arrivée de tranches de fromage ou de charcuterie (3) à emballer dans la zone du convoyeur d'alimentation, avec une orientation transversale et longitudinale des tranches de fromage ou de charcuterie s'effectuant dans la zone du convoyeur d'alimentation et avec un conduit de transfert des tranches de fromage ou de charcuterie orientées en direction d'une machine d'emballage, **caractérisé par**
(a) l'orientation longitudinale des tranches de fromage ou de charcuterie (3) - vu dans la direction de transport des tranches de fromage ou de charcuterie-dans la zone d'extrémité du convoyeur d'alimentation après le transport des tranches de fromage ou de charcuterie à travers une ou plusieurs zones de mise en tampon du convoyeur d'alimentation (1) et avant le dépôt des tranches de fromage ou de charcuterie sur une bande d'alimentation (14, 19) ; et
(b) une orientation transversale des tranches de fromage ou de charcuterie (3) avant l'orientation longitudinale des tranches de fromage ou de charcuterie ; et
(c) la formation de format des tranches de fromage ou de charcuterie après le transport des tranches de fromage ou de charcuterie à travers une ou plusieurs zones de mise en tampon du convoyeur d'alimentation (1) et avant le dépôt des tranches de fromage ou de charcuterie (3) sur la bande d'alimentation (14, 19).

2. Procédé selon la revendication 1, **caractérisé par** l'orientation longitudinale et la formation de format des tranches de fromage ou de charcuterie (3) directement avant le dépôt de ces dernières sur la bande d'alimentation (14, 19).

3. Procédé selon l'une quelconque des revendications précédentes, **caractérisé par** l'orientation longitudinale des tranches de fromage ou de charcuterie (3) au moyen de deux bandes de regroupement (9, 10) disposées l'une derrière l'autre, sur lesquelles respectivement une partie des tranches de fromage ou de charcuterie disposées les unes à côté des autres sont orientées en longueur.
